(19) Europäisches Patentamt
European Patent Office
Office européen des brevets

(11) **EP 4 596 132 B1**

(12) **EUROPEAN PATENT SPECIFICATION**

(45) Date of publication and mention
of the grant of the patent:
**29.07.2026 Bulletin 2026/31**

(21) Application number: **23888337.5**

(22) Date of filing: **12.09.2023**

(51) International Patent Classification (IPC):
**B21D 22/02** (2006.01)    **B21D 22/20** (2006.01)
**G01B 5/20** (2006.01)    **G06F 30/20** (2020.01)
G06F 119/14 (2020.01)    G06F 119/18 (2020.01)
G06F 113/24 (2020.01)    G06F 111/10 (2020.01)

(52) Cooperative Patent Classification (CPC):
**B21D 22/02; B21D 22/20; G01B 5/20; G06F 30/20;**
G06F 2111/10; G06F 2113/24; G06F 2119/14;
G06F 2119/18

(86) International application number:
**PCT/JP2023/033174**

(87) International publication number:
**WO 2024/100982 (16.05.2024 Gazette 2024/20)**

(54) **PRESS FORMED PART SHAPE PREDICTION METHOD AND PRESS FORMED PART SHAPE PREDICTION APPARATUS**

FORMVORHERSAGEVERFAHREN UND -VORRICHTUNG FÜR PRESSGEFORMTEN ARTIKEL

PROCÉDÉ ET DISPOSITIF DE PRÉDICTION DE FORME POUR ARTICLE MOULÉ À LA PRESSE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.11.2022 JP 2022177778**

(43) Date of publication of application:
**06.08.2025 Bulletin 2025/32**

(73) Proprietor: **JFE Steel Corporation
Tokyo 100-0011 (JP)**

(72) Inventors:
• **URABE, Masaki**
**Tokyo 100-0011 (JP)**
• **NAKAMOTO, Taira**
**Tokyo 100-0011 (JP)**
• **FUJII, Yusuke**
**Tokyo 100-0011 (JP)**

(74) Representative: **Hoffmann Eitle
Patent- und Rechtsanwälte PartmbB
Arabellastraße 30
81925 München (DE)**

(56) References cited:
**WO-A1-2021/161578    JP-A- 2022 047 865
JP-B2- 4 001 675**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field

The present invention relates to a press formed part shape prediction method and a press formed part shape prediction apparatus for predicting a shape of a press formed part whose shape has become stable after the shape changes with the lapse of time after springback instantaneously occurring immediately after die release in press forming of a metal sheet.

Background

Press forming is a manufacturing method capable of manufacturing a metal part at low cost in a short time, and is used for manufacturing many automotive parts. In recent years, in order to achieve both collision safety of an automobile and weight reduction of a vehicle body, a metal sheet having higher strength has been used for the automotive parts. One of the main problems in press-forming the high-strength metal sheet is deterioration of dimensional accuracy due to springback. A phenomenon in which stress generated when the metal sheet is deformed by press forming becomes a driving force to cause the metal sheet to return to a shape before being processed like a spring is called springback.

The stress generated at the time of press forming is larger with higher strength of the metal sheet, thereby the shape variation due to springback also increases. Therefore, it is more difficult to keep the shape after springback within a prescribed dimension as the steel sheet has higher strength. Therefore, in a press formed part production line, a trial press formed part which is an actual press formed part is produced, and then the dimension is measured. In a case where the dimensional accuracy does not satisfy the standard, correction of a die or adjustment such as changing a forming condition such as a processing load is performed.

Generally, the dimensional accuracy of the actual press formed part is measured by a method in which a gap amount between an inspection jig and a formed part is measured after the formed part is installed in a dedicated inspection jig, or by a method in which a three-dimensional shape of a formed part is measured and compared with normal-size shape data on a computer (see Non Patent Literature 1).

However, in the actual press formed part, it is known that shape variation occurs with the lapse of time immediately after springback after die release (see Patent Literature 1). It takes at least 30 minutes or more to achieve a stable state (stable shape) in which the shape variation hardly occurs in the actual press formed part that has been die-released and sprung back. For this reason, Patent Literature 1 discloses a method for measuring the shape of a press formed part after being left for 30 minutes or more after being die-released.

WO 2021/161578 A1 discloses a press formed part shape prediction method according to the preamble of claim 1.

Citation List

Patent Literature

Patent Literature 1: Japanese Patent No. 6981487

Non Patent Literature

Non Patent Literature 1: Handbook of Ease or Difficulty in Press Forming Third Edition, edited by Japan Sheet Metal Forming Research Group, P. 341-342

Summary

Technical Problem

However, from the viewpoint of productivity, there has been a demand for a method capable of easily predicting a stable shape of an actual press formed part without waiting for 30 minutes or more after die-releasing the actual press formed part.

The present invention has been made to solve the above problems, and an object of the present invention is to provide a press formed part shape prediction method and a press formed part shape prediction apparatus capable of easily predicting a stable shape of a press formed part from a shape measurement result in several seconds to several minutes after forming.

Solution to Problem

A press formed part shape prediction method according to the present invention predicts a shape of a press formed part whose shape has become stable after the shape changes with a lapse of time after springback instantaneously occurring immediately after die release in press forming of a metal sheet, and includes: a coefficient specifying step of measuring, at least at two timings in a predetermined time that has elapsed from immediately after die release, a shape variation amount of a specific portion of the press formed part at each timing, and specifying coefficients a and b in Equation (1) as coefficients a1 and b1 based on measurement results; and a prediction value calculating step of obtaining Xf, which is a prediction value of the shape variation amount of the specific portion in the press formed part whose shape has become stable, by substituting a time tf set in advance according to the timing of measurement of the shape variation amount into Equation (2),

$$x = a \times \log(t) + b \qquad (1)$$

where t is an elapsed time from immediately after die release, and
x is a shape variation amount at time t,

$$Xf = a1 \times \log(tf) + b1 \qquad (2)$$

where tf is a time set in advance, and
a1 and b1 are values specified in the coefficient specifying step.

In the prediction value calculating step, tf may be set to a numerical value in a range of 4400 to 7800 seconds in a case where the two timings are within 120 seconds immediately after die release, and tf may be set to a numerical value in a range of 7900 to 31000 seconds in a case where the two timings are from 120 seconds to 1800 seconds immediately after die release.

The shape variation amount measured in the coefficient specifying step may be one of: a variation amount of a distance between two points of the press formed part; a variation amount of a distance between one point of the press formed part and one point of a reference jig; a variation amount of an angle between a line segment between two points of the press formed part and a line segment between two points of the reference jig; a variation amount of a curvature of a surface of the press formed part; or a variation amount of an angle formed by line segments between two sets of two points sandwiching one or more bend ridges in the press formed part.

A press formed part shape prediction apparatus according to the present invention predicts a shape of a press formed part whose shape has become stable after the shape changes with a lapse of time after springback instantaneously occurring immediately after die release in press forming of a metal sheet, and includes: a time measurement unit configured to measure an elapsed time from immediately after die release; a shape measurement unit configured to measure, at least at two timings in a predetermined time that has elapsed from immediately after the die release, a shape variation amount of a specific portion of the press formed part at each timing, and record a measurement timing, a measurement portion, and a measurement value; and a prediction value calculation unit configured to specify coefficients a and b in Equation (1) as coefficients a1 and b1 based on a measurement result of the shape measurement unit, and obtain Xf, which is a prediction value of the shape variation amount of the specific portion in the press formed part whose shape has become stable, by substituting a time tf set in advance according to the timing of measurement of the shape variation amount into Equation (2),

$$x = a \times \log(t) + b \qquad (1)$$

where t is an elapsed time from immediately after die release, and
x is a shape variation amount at time t,

$$Xf = a1 \times \log(tf) + b1 \qquad (2)$$

where tf is a time set in advance, and
a1 and b1 are values specified by the prediction value calculation unit.

Advantageous Effects of Invention

According to the present invention, it is possible to predict a stable shape of a press formed part without waiting for a time (for example, 30 minutes) during which the dimension is to be generally stabilized after die release. Whether the stable shape of the press formed part finally achieves the target dimensional accuracy can be predicted at an early stage.

Brief Description of Drawings

[FIG. 1] FIG. 1 is an explanatory diagram of a press formed part shape prediction method according to a first embodiment.
[FIG. 2] FIG. 2 is an explanatory diagram of a press formed part shape prediction apparatus according to a second embodiment.
[FIG. 3] FIG. 3 is an explanatory diagram of a specific configuration of a shape measurement unit in the press formed part shape prediction apparatus illustrated in FIG. 2.
[FIG. 4] FIG. 4 is a diagram for describing the background leading to the present invention (part 1).
[FIG. 5] FIG. 5 is a diagram for describing the background leading to the present invention (part 2).
[FIG. 6] FIG. 6 is a diagram for describing the background leading to the present invention (part 3).
[FIG. 7] FIG. 7 is a diagram for describing the background leading to the present invention (part 4).
[FIG. 8] FIG. 8 is an explanatory view of a shape and specific portions of a press formed part of an Example, in which FIG. 8(a) illustrates a plan view, FIG. 8(b) illustrates a cross-sectional view taken along line D-D' of FIG. 8(a), and FIG. 8(c) illustrates three cross sections of a cross section A-A', a cross section B-B', and a cross section C-C' of FIG. 8(a).
[FIG. 9] FIG. 9 is a graph indicating results of the Example (part 1).
[FIG. 10] FIG. 10 is a graph indicating results of the Example (part 2).

Description of Embodiments

[Background leading to the Invention]

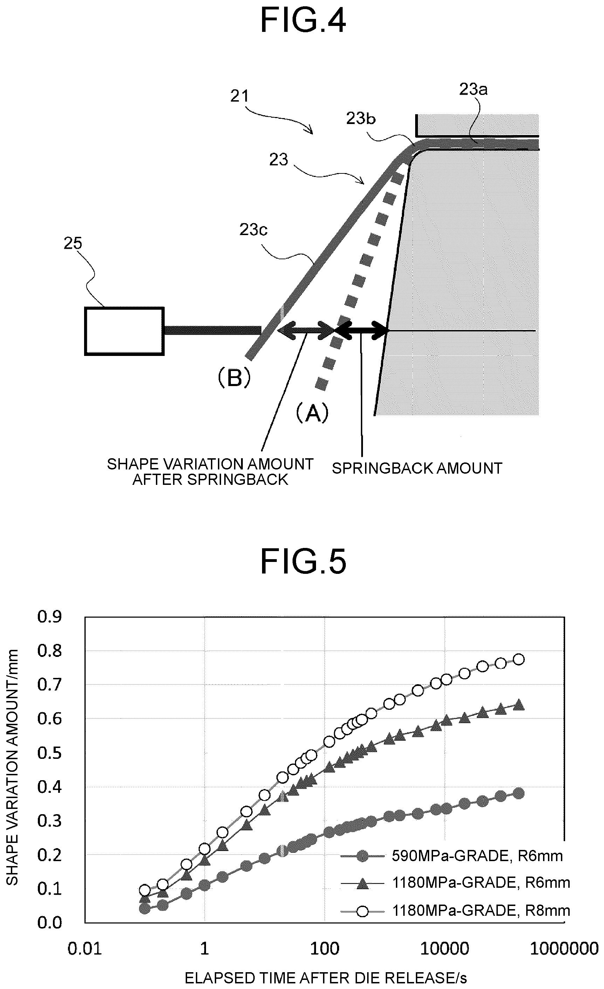

Prior to the description of the embodiments, the background leading to the present invention will be described. The inventors have studied a method of accurately predicting a dimensional prediction value of a stable shape after springback by a simple method. In the examination, as illustrated in FIG. 4, an L-bending die testing machine 21 was used to perform a test of press-forming (L-bending and forming) an L-shaped component 23 having a fixed piece portion 23a and a bent piece portion 23c continuous via a shoulder part of a punch 23b. In the test, a laser displacement meter 25 was installed on a side surface of the L-bending die testing machine 21 to irradiate the bent piece portion 23c with a laser, and the displacement amount of the bent piece portion 23c after die-releasing from the forming bottom dead center position was continuously measured. A dotted line (A) in FIG. 4 indicates the bent piece portion 23c at the time of springback immediately after die-releasing, and a solid line (B) indicates the bent piece portion 23c after deformation with the lapse of time thereafter. The horizontal distance between the dotted line (A) and the solid line (B) at the position in the height direction where the laser displacement meter 25 was installed was evaluated as the magnitude of the temporal shape variation (shape variation amount) after the springback.
The conditions of the L-shaped component 23 are as follows.

· Tensile strength: 1180 MPa-grade, 590 MPa-grade
· Blank shape: length 120 (mm) × width 90 (mm) × thickness 1.2 (mm)
· Curvature radius of the shoulder part of a punch 23b: R6 mm, R8 mm

FIG. 5 is a graph indicating the above test results, where the horizontal axis represents the logarithm of the elapsed time (s) after die release, and the vertical axis represents the shape variation amount (mm) of the bent piece portion 23c. As indicated in FIG. 5, as the tensile strength is higher and the curvature radius of the shoulder part of a punch 23b of the L-bending and forming is larger, the shape variation amount of the bent piece portion 23c becomes larger. However, they are common in that the shape gradually shifts to a gradual change (inclination) with the lapse of time from immediately after die release, and the shape becomes stable (stable shape).

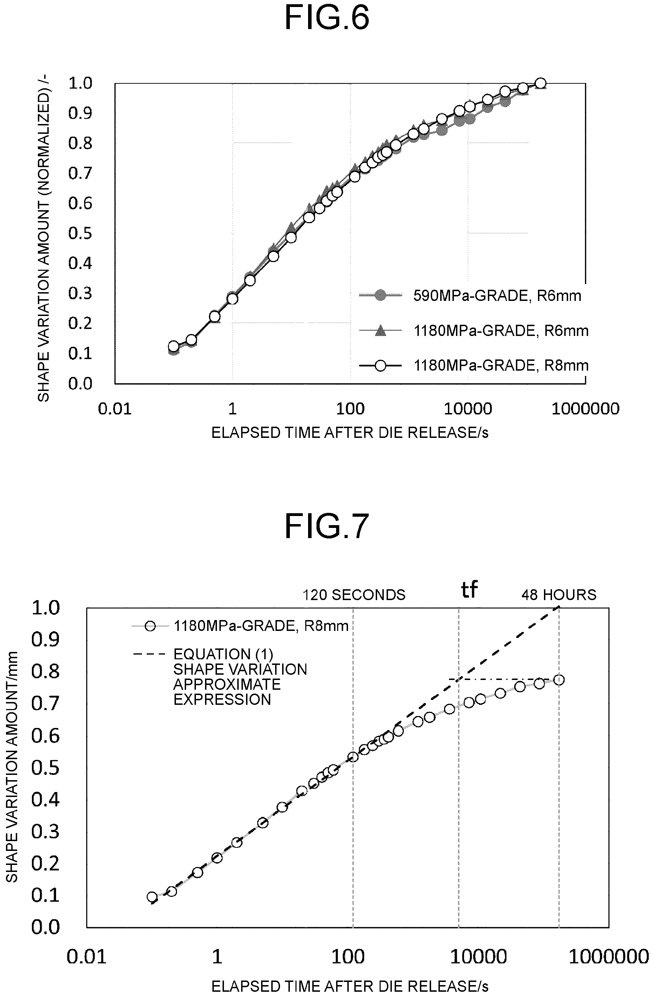

In FIG. 6, the shape variation amount from 0.1 seconds to 172800 seconds (48 hours) indicated in FIG. 5 is divided by the shape variation amount at 172800 seconds (48 hours) and normalized, that is, the shape variation amount at 172800 seconds is indicated as 1.0. As indicated in FIG. 6, the three curves illustrated in FIG. 5 substantially overlap each other. That is, even if factors affecting the amount of springback, such as the tensile strength of the metal sheet and the curvature radius of the shoulder part of a punch 23b of the L-bending and forming, are different, the temporal shape variation after springback occurs in the same pattern (shape variation path). This indicates that it is possible to predict the shape variation amount of the actual press formed part (L-shaped component 23) whose shape has become stable after the shape changes with the lapse of time after the springback, based on the shape variation amount at the time point when a predetermined time of several seconds to several minutes elapses immediately after the die release without waiting for 30 minutes or more after die-releasing the actual press formed part.

As indicated in FIG. 7, the shape variation amount from immediately after die release (0.1 seconds after die release) to a predetermined time (120 seconds after die release) is substantially a straight line on the semi-logarithmic graph. This straight line is expressed by the following linear Equation (shape variation approximate expression) regarding the logarithm of the elapsed time after die release. At least at two timings in a predetermined time that has elapsed from immediately after the die release (for example, 2 times within 120 seconds), the shape variation amount of the L-shaped component 23 at each timing is measured and the coefficients a and b of Equation (1) above are specified based on the measurement results, thereby the shape variation amount corresponding to the elapsed time after the L-bending and forming can be obtained.

$$x = a \times \log(t) + b \qquad\qquad (1)$$

t: elapsed time from immediately after die release
x: shape variation amount at time t
a and b are coefficients

However, as indicated in FIG. 7, the relationship between the elapsed time after die release and the shape variation amount is such that the shape variation due to the temporal change after the actual springback is nonlinear and gradually shifts to a gentle variation (inclination) with the lapse of time from immediately after die release, and the shape becomes stable (stable shape). Therefore, at the time point of 172800 seconds (48 hours), a deviation occurs between a prediction value of the shape variation amount, which is calculated by the shape variation approximate expression (linear Equation) of Equation (1), and the actual shape variation amount, and correction is necessary. Thus, t (elapsed time tf after die release) in Equation (1) at the time the prediction value of the shape variation amount calculated by Equation (1) becomes equal to the actual shape variation amount after the lapse of 48 hours (172800 seconds) after the L-bending and forming was obtained. Of a case where, at two timings (first time: t1 seconds, second time: t2 seconds) within 120 seconds immediately after die release, the shape variation amount of the L-shaped component 23 at each timing is measured and the coefficients a and b of Equation (1) are specified based on the measurement results, Table 1 collectively indicates the above conditions and results.

[Table 1]

Table 1

| | Elapsed time after forming | | Coefficients of shape variation approximate expression | | tf(s) that becomes equal to shape variation amount after lapse of 48 hours | Error of shape variation amount when tf = 5938 seconds is substituted into t of shape variation approximate expression | |
|---|---|---|---|---|---|---|---|
| | t1(s) | t2(s) | a | b | | | |
| 590Mpa-grade R6mm | 30 | 60 | 0.073 | 0.116 | 4357 | 0.010mm | 3% |
| | 60 | 120 | 0.068 | 0.124 | 5843 | 0.000mm | 0% |
| 1180Mpa-grade R6mm | 30 | 60 | 0.106 | 0.236 | 6808 | -0.006mm | -1% |
| | 60 | 120 | 0.116 | 0.218 | 4554 | 0.013mm | 2% |

(continued)

| | Elapsed time after forming | | Coefficients of shape variation approximate expression | | tf(s) that becomes equal to shape variation amount after lapse of 48 hours | Error of shape variation amount when tf = 5938 seconds is substituted into t of shape variation approximate expression | |
|---|---|---|---|---|---|---|---|
| | t1(s) | t2(s) | a | b | | | |
| 1180Mpa-grade R8mm | 30 | 60 | 0.140 | 0.246 | 6218 | 0.003mm | 0% |
| | 60 | 120 | 0.133 | 0.258 | 7845 | 0.016mm | -2% |

As indicated in Table 1, the elapsed time tf after die release at which the prediction value of the shape variation amount calculated by Equation (1) becomes equal to the actual shape variation amount 48 hours after die release was minimum 4357 seconds to maximum 7845 seconds, and the average was 5938 seconds. The prediction value of the shape variation amount was calculated by using the coefficients a and b of the shape variation approximate expression in Equation (1) and substituting the average value tf = 5938 seconds into the elapsed time t after die release in Equation (1), and was compared with the shape variation amount after reaching the actual stable shape after the lapse of 48 hours. As a result of the comparison, the error of the prediction value of the shape variation amount was within $\pm3\%$ (average 2%), and thus good accuracy was obtained.

In Table 1, the two measurement timings were set at the elapsed time after die release within 120 seconds. For this reason, of a case where the measurement timings were set at the elapsed time after die release from 120 seconds to 360 seconds, similarly, the coefficients a and b of Equation (1) were calculated, and the elapsed time tf after die release at which the prediction value of the shape variation amount becomes equal to the actual shape variation amount after the lapse of 48 hours after die release was obtained. Table 2 collectively indicates these conditions and results.

[Table 2]

**Table 2**

| | Elapsed time after forming | | Coefficients of shape variation approximate expression | | tf(s) that becomes equal to shape variation amount after lapse of 48 hours | Error of shape variation amount when tf = 15600 seconds is substituted into t of shape variation approximate expression | |
|---|---|---|---|---|---|---|---|
| | t1(s) | t2(s) | a | b | | | |
| 590Mpa-grade R6mm | 120 | 240 | 0.050 | 0.163 | 24807 | -0.004mm | -1% |
| | 180 | 300 | 0.049 | 0.163 | 31190 | -0.009mm | -3% |
| | 240 | 360 | 0.042 | 0.182 | 15600 | -0.019mm | -8% |
| 1180Mpa-grade R6mm | 120 | 240 | 0.094 | 0.265 | 10887 | 0.027mm | 6% |
| | 180 | 300 | 0.099 | 0.251 | 9117 | 0.036mm | 7% |
| | 240 | 360 | 0.090 | 0.275 | 12905 | 0.019mm | 4% |
| 1180Mpa-grade R8mm | 120 | 240 | 0.133 | 0.283 | 7845 | 0.057mm | 9% |
| | 180 | 300 | 0.121 | 0.285 | 11453 | 0.032mm | 5% |
| | 240 | 360 | 0.111 | 0.305 | 16597 | 0.011mm | 2% |

As indicated in Table 2, the elapsed time tf after die release at which the prediction value of the shape variation amount calculated by Equation (1) becomes equal to the actual shape variation amount 48 hours after die release was minimum 7845 seconds to maximum 31190 seconds, and the average was 15600 seconds. In addition, the error between the shape variation amount, which was obtained by using the shape change approximate formula coefficients a and b in Equation (1) and substituting the average value tf = 15600 seconds into the elapsed time t after die release in Equation (1), and the shape variation amount after reaching the actual stable shape was within ±9% (average 2%), and thus good accuracy was obtained. The present invention has been made based on the above examination results.

[First Embodiment]

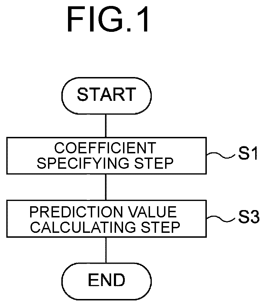

A press formed part shape prediction method according to the present embodiment is a method for predicting the shape of a press formed part whose shape has become stable after the shape changes with the lapse of time after springback instantaneously occurring immediately after die release in press forming of a metal sheet. As indicated in FIG. 1, the press formed part shape prediction method according to the present embodiment includes a coefficient specifying step and a prediction value calculating step. Each step will be described in detail below.

<Coefficient specifying step>

The coefficient specifying step is a step of measuring, at least at two timings in a predetermined time that has elapsed from immediately after the die release, the shape variation amount of the specific portion of the press formed part at each timing, and specifying coefficients a and b in the following Equation (1) as coefficients a1 and b1 based on the measurement results.

$$x = a \times \log(t) + b \qquad (1)$$

where t is an elapsed time from immediately after die release, and
x is a shape variation amount at time t.

The specific portion and the variation amount in the shape variation amount of the specific portion of the press formed part measured in the coefficient specifying step can be appropriately set, but are preferably set as follows, for example.

· Variation amount of a distance between two specified points of the press formed part
· Variation amount of a distance between one specified point of the press formed part and one specified point of a reference jig
· Variation amount of an angle between a line segment between two specified points of the press formed part and a line segment between two specified points of the reference jig
· Variation amount of a curvature of the specific portion on a surface of the press formed part
· Variation amount of an angle formed by line segments between two sets of two points sandwiching one or more bend ridges in the press formed part

<Prediction value calculating step>

The prediction value calculating step is a step of obtaining Xf, which is a prediction value of the shape variation amount of the specific portion in the press formed part whose shape has become stable, by substituting a time tf set in advance according to the timing of the measurement of the shape variation amount into the following Equation (2).

$$Xf = a1 \times \log(tf) + b1 \qquad (2)$$

where tf is a time set in advance, and
a1 and b1 are values specified in the coefficient specifying step.

In the prediction value calculating step, in a case where two timings are within 120 seconds immediately after die release, tf is set to a numerical value in the range of 4400 to 7800 seconds as in the range of tf indicated in Table 1. In addition, in a case where two timings are from 120 seconds to 1800 seconds immediately after die release, tf is set to a numerical value in the range of 7900 to 31000 seconds as in the range of tf indicated in Table 2.

In the press formed part shape prediction method of the present embodiment, at least two dimension measurements and measurement timings are recorded after press forming, and predetermined calculation work is performed. As a result, it is possible to predict the stable shape of the press formed part without waiting for a time (for example, 30 minutes) during which the dimension is to be generally stabilized after die release. Whether the shape of the press formed part after being stable finally achieves the target dimensional accuracy can be predicted at an early stage.

[Second Embodiment]

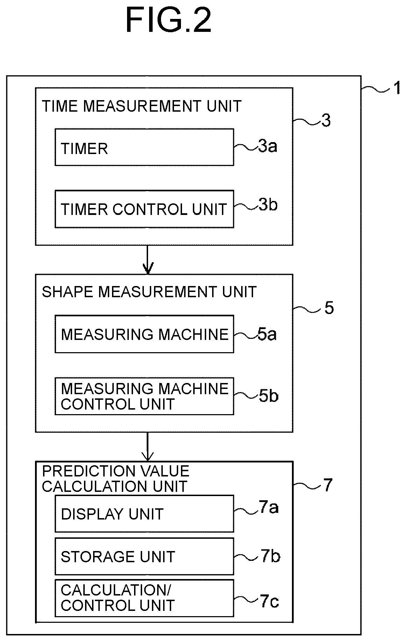

The present embodiment relates to a press formed part shape prediction apparatus 1 that executes the press formed part shape prediction method according to the first embodiment. The press formed part shape prediction apparatus 1 according to the present embodiment predicts a shape of a press formed part whose shape has become stable after the shape changes with the lapse of time after springback instantaneously occurring immediately after die release in press forming of a metal sheet. Specifically, as illustrated in FIG. 2, the press formed part shape prediction apparatus 1 according to the present embodiment includes a time measurement unit 3, a shape measurement unit 5, and a prediction value calculation unit 7. Each configuration will be described below.

<Time measurement unit>

The time measurement unit 3 measures an elapsed time from immediately after die-releasing the press formed part. As a specific configuration example of the time measurement unit 3, one including a timer 3a and a timer control unit 3b that activates the timer 3a in conjunction with a die-releasing operation of a die and outputs a measurement start signal to the shape measurement unit 5 based on the measurement time of the timer 3a, can be exemplified.

<Shape measurement unit>

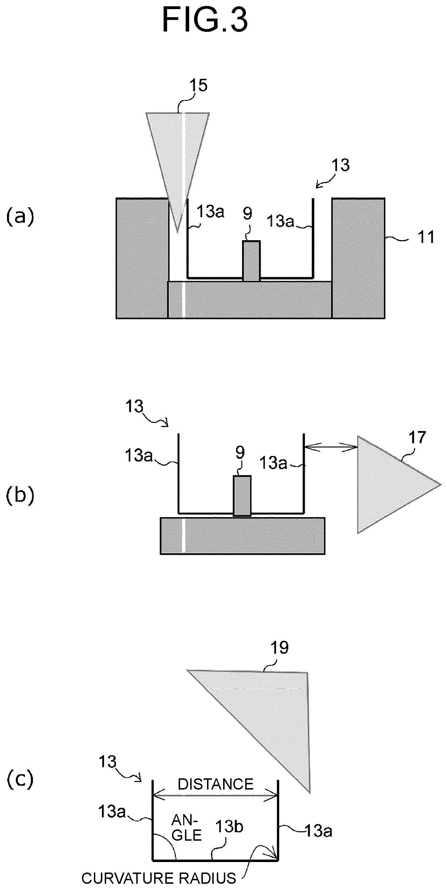

At least at two timings in a predetermined time that has elapsed from immediately after the die release, the shape measurement unit 5 measures a shape variation amount of a specific portion of the press formed part at each timing, and records the measurement timing, the measurement portion, and the measurement value. The measurement may be performed at a timing when the signal is input based on the signal from the time measurement unit 3. The measurement timing, the specific portion, and the shape variation amount are similar to those described in the first embodiment.
As a specific configuration example of the shape measurement unit 5, one including an optical or contact type measuring machine 5a and a measuring machine control unit 5b that controls the measuring machine 5a, can be exemplified. Examples of the measuring machine 5a and the measurement portion include those illustrated in FIG. 3. In the example illustrated in FIG. 3(a), a gap between a specific portion of a U-shaped cross section part 13, which is a press formed part fixed to an inspection jig 11 by a fixing pin 9, for example, a side wall portion 13a, and the inspection jig 11 is measured using a feeler gauge 15. In the example illustrated in FIG. 3(b), a range finder 17 is installed at a position away from the specific portion of the U-shaped cross section part 13 fixed to the inspection jig 11 by the fixing pin 9, for example, the side wall portion 13a, and a distance between the range finder 17 and the side wall portion 13a is measured. The range finder 17 may be an optical type or a contact type. Furthermore, the example illustrated in FIG. 3(c) is an example in which, using an optical type measuring machine 19, a distance between opposing side walls of the U-shaped cross section part 13 is measured, an angle between the side wall portion 13a and a bottom portion 13b is measured, and a curvature radius of a bending portion between the side wall portion 13a and the bottom portion 13b is measured.

<Prediction value calculation unit>

The prediction value calculation unit 7 specifies coefficients a and b in the following Equation (1) as coefficients a1 and b1 based on the measurement result of the shape measurement unit 5. Then, the prediction value calculation unit 7 obtains Xf, which is a prediction value of the shape variation amount of the specific portion in the press formed part whose shape has become stable, by substituting a time tf set in advance according to the timing of the measurement of the shape variation amount into Equation (2). The measurement timing and the time tf set in advance according to the timing are similar to those described in the first embodiment.

$$x = a \times \log(t) + b \qquad\qquad (1)$$

where t is an elapsed time from immediately after die release, and
x is a shape variation amount at time t.

$$Xf = a1 \times \log(tf) + b1 \qquad\qquad (2)$$

where tf is a time set in advance, and

a1 and b1 are values specified in the coefficient specifying step.

As a specific configuration example of the prediction value calculation unit 7, one including a display unit 7a, a storage unit 7b, and a calculation/control unit 7c is exemplified. The display unit 7a and the storage unit 7b are connected to the calculation/control unit 7c, and the respective functions are executed by a command from the calculation/control unit 7c. The display unit 7a displays a prediction value of the shape variation amount, or the shape. The storage unit 7b stores the prediction value of the shape variation amount, and stores a calculation program including Equations (1), (2), and the like. The calculation/control unit 7c inputs the measurement result of the shape measurement unit 5, calculates the prediction value of the shape variation amount based on Equations (1) and (2), and controls the display unit 7a and the storage unit 7b.

An operation of the press formed part shape prediction apparatus 1 configured as described above will be described. First, the time measurement unit 3 measures the elapsed time from immediately after die-releasing the press formed part from a die. At least at two timings in a predetermined time that has elapsed from immediately after the die release, the shape measurement unit 5 measures a shape variation amount of a specific portion of the press formed part at each timing, and records the measurement timing, the measurement portion, and the measurement value. The prediction value calculation unit 7 specifies the coefficients a and b in Equation (1) as the coefficients a1 and b1 based on the measurement result of the shape measurement unit 5. Then, the prediction value calculation unit 7 obtains Xf, which is a prediction value of the shape variation amount of the specific portion in the press formed part whose shape has become stable, by substituting the time tf set in advance according to the timing of the measurement of the shape variation amount into Equation (2), and records and/or displays the result.

[Example]

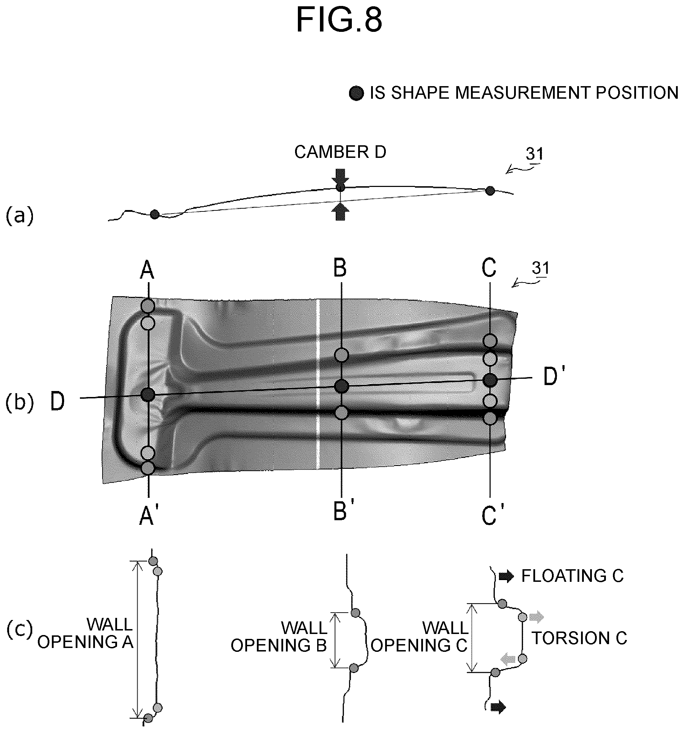

A test for confirming the effect of the present invention has been performed and will be described below. As illustrated in FIG. 8, a press formed part used in the test is a B-pillar component 31 having a substantially T-shaped protruding portion in plan view, and has a hat-shaped cross section and warps convexly upward in the longitudinal direction. A B-pillar press forming test (deep drawing (draw forming)) was performed using a steel sheet of 1180 MPa-grade, and thereafter, shape measurement was continuously performed at regular time intervals using a three-dimensional shape measuring machine.

Deformation due to springback in the B-pillar component 31 can be largely classified into camber deformation (camber), torsional deformation (torsion), and wall opening deformation (wall opening) of a cross section. As specific portions to be evaluated, a wall opening C of a cross section C-C', a floating C (floating of a flange portion due to wall opening deformation), and a torsion C were set, as illustrated in FIG. 8. Then, after a lapse of 4 minutes after die release, the relationships between the elapsed time after die release and camber, torsion, and wall opening were measured for the specific portions in FIG. 8.

Based on the measurement results, identification of Equations (1) and (2) was performed. Assuming that a first elapsed time t1 after die release was 252 seconds and a second elapsed time t2 after die release was 1800 seconds, dimension measurement values of the wall opening C, the torsion C, and the floating C at the elapsed times were obtained, and coefficients (a, b) of the shape variation approximate expression of Equation (1) were calculated and set as a1 and b1. Table 3 indicates the values of the coefficients a1 and b1.

[Table 3]

**Table 3**

|  | $a_1$ | $b_1$ |
|---|---|---|
| Wall opening C | 0.064 | -0.155 |
| Torsion C | 0.030 | -0.073 |
| Floating C | 0.069 | -0.166 |

Since t1 and t2 were 120 seconds or more and 1800 seconds or less, a value to be substituted for t in Equation (2) was set to tf = 20400 seconds within a range of 7900 to 31000 seconds, and tf = 20400 seconds and coefficients a1 and b1 were substituted in Equation (2) to calculate a prediction value of the shape variation. Then, the prediction value was compared with the dimension measurement value after 48 hours.

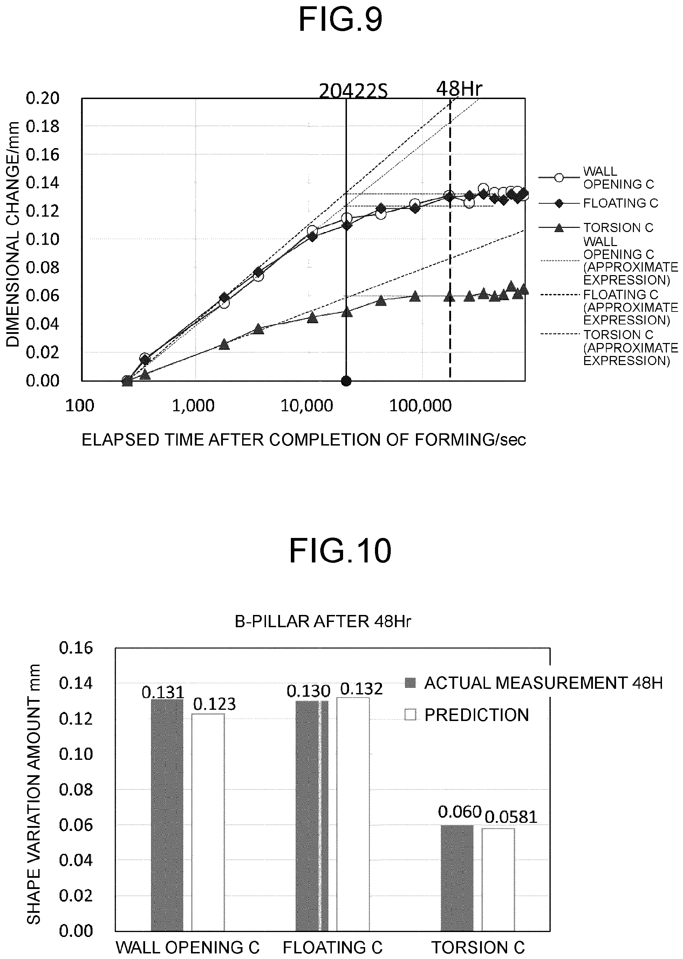

The results are indicated in FIGS. 9 and 10. FIG. 9 is a graph of a prediction value (broken line) and an actual measured value (plot), in which the vertical axis represents the dimensional change (mm) and the horizontal axis represents the elapsed time (s) after die release. FIG. 10 is a bar graph comparing the shape variation amount after 48 hours and the prediction value for each specific portion. From the results of FIGS. 9 and 10, the prediction accuracy of the present invention was as good as the wall opening C (-6%), the floating C (+1%), and the torsion C (-3%).

Industrial Applicability

According to the present invention, it is possible to provide a press formed part shape prediction method and a press formed part shape prediction apparatus capable of easily predicting a stable shape of a press formed part from a shape measurement result in several seconds to several minutes after forming.

Reference Signs List

| | |
|---|---|
| 1 | PRESS FORMED PART SHAPE PREDICTION APPARATUS |
| 3 | TIME MEASUREMENT UNIT |
| 3a | TIMER |
| 3b | TIMER CONTROL UNIT |
| 5 | SHAPE MEASUREMENT UNIT |
| 5a | MEASURING MACHINE |
| 5b | MEASURING MACHINE CONTROL UNIT |
| 7 | PREDICTION VALUE CALCULATION UNIT |
| 7a | DISPLAY UNIT |
| 7b | STORAGE UNIT |
| 7c | CALCULATION/CONTROL UNIT |
| 9 | FIXING PIN |
| 11 | INSPECTION JIG |
| 13 | U-SHAPED CROSS SECTION PART |
| 13a | SIDE WALL PORTION |
| 13b | BOTTOM PORTION |
| 15 | FEELER GAUGE |
| 17 | RANGE FINDER |
| 19 | OPTICAL TYPE MEASURING MACHINE |
| 21 | L-BENDING DIE TESTING MACHINE |
| 23 | L-SHAPED COMPONENT |
| 23a | FIXED PIECE PORTION |

23b    SHOULDER PART OF A PUNCH

23c    BENT PIECE PORTION

25    LASER DISPLACEMENT METER

31    B-PILLAR COMPONENT

**Claims**

1. A press formed part shape prediction method for predicting a shape of a press formed part whose shape has become stable after the shape changes with a lapse of time after springback instantaneously occurring immediately after die release in press forming of a metal sheet, the method being **characterized in that** it comprises:

   a coefficient specifying step of

   measuring, at least at two timings in a predetermined time that has elapsed from immediately after die release, a shape variation amount of a specific portion of the press formed part at each timing, and specifying coefficients a and b in Equation (1) as coefficients a1 and b1 based on measurement results; and

   a prediction value calculating step of obtaining Xf, which is a prediction value of the shape variation amount of the specific portion in the press formed part whose shape has become stable, by substituting a time tf set in advance according to the timing of measurement of the shape variation amount into Equation (2),

$$x = a \times \log(t) + b \tag{1}$$

   where t is an elapsed time from immediately after die release, and
   x is a shape variation amount at time t,

$$Xf = a1 \times \log(tf) + b1 \tag{2}$$

   where tf is a time set in advance, and
   a1 and b1 are values specified in the coefficient specifying step.

2. The press formed part shape prediction method according to claim 1, wherein in the prediction value calculating step, tf is set to a numerical value in a range of 4400 to 7800 seconds in a case where the two timings are within 120 seconds immediately after die release, and tf is set to a numerical value in a range of 7900 to 31000 seconds in a case where the two timings are from 120 seconds to 1800 seconds immediately after die release.

3. The press formed part shape prediction method according to claim 1 or 2, wherein the shape variation amount measured in the coefficient specifying step is one of: a variation amount of a distance between two points of the press formed part; a variation amount of a distance between one point of the press formed part and one point of a reference jig; a variation amount of an angle between a line segment between two points of the press formed part and a line segment between two points of the reference jig; a variation amount of a curvature of a surface of the press formed part; or a variation amount of an angle formed by line segments between two sets of two points sandwiching one or more bend ridges in the press formed part.

4. A press formed part shape prediction apparatus for predicting a shape of a press formed part whose shape has become stable after the shape changes with a lapse of time after springback instantaneously occurring immediately after die release in press forming of a metal sheet, the apparatus comprising:

   a time measurement unit configured to measure an elapsed time from immediately after die release;
   a shape measurement unit configured to

   measure, at least at two timings in a predetermined time that has elapsed from immediately after the die release, a shape variation amount of a specific portion of the press formed part at each timing, and record a measurement timing, a measurement portion, and a measurement value; and

a prediction value calculation unit configured to

specify coefficients a and b in Equation (1) as coefficients a1 and b1 based on a measurement result of the shape measurement unit, and
obtain Xf, which is a prediction value of the shape variation amount of the specific portion in the press formed part whose shape has become stable, by substituting a time tf set in advance according to the timing of measurement of the shape variation amount into Equation (2),

$$x = a \times \log(t) + b \qquad\qquad (1)$$

where t is an elapsed time from immediately after die release, and
x is a shape variation amount at time t,

$$Xf = a1 \times \log(tf) + b1 \qquad\qquad (2)$$

where tf is a time set in advance, and
a1 and b1 are values configured to be specified in a coefficient specifying step by the prediction value calculation unit.

**Patentansprüche**

1. Formvorhersageverfahren für einen pressgeformten Artikel zum Vorhersagen einer Form eines pressgeformten Artikels, dessen Form stabil geworden ist, nachdem sich die Form mit dem Verstreichen der Zeit nach einer Rückfederung, die unmittelbar nach der Freigabe aus dem Werkzeug beim Pressformen eines Metallblechs augenblicklich auftritt, verändert, wobei das Verfahren **dadurch gekennzeichnet ist, dass** es umfasst:

einen Koeffizientenbestimmungsschritt des

Messens, zumindest zu zwei Zeitpunkten in einer vorbestimmten Zeit, die seit unmittelbar nach der Freigabe aus dem Werkzeug verstrichen ist, einer Formänderungsmenge eines spezifischen Abschnitts des pressgeformten Artikels zu jedem Zeitpunkt, und
Bestimmens von Koeffizienten a und b in Gleichung (1) als Koeffizienten a1 und b1, basierend auf Messergebnissen; und

einen Vorhersagewertberechnungsschritt des Erhaltens von Xf, der ein Vorhersagewert der Formänderungsmenge des spezifischen Abschnitts in dem pressgeformten Artikel, dessen Form stabil geworden ist, ist, durch Einsetzen einer im Voraus entsprechend dem Zeitpunkt der Messung der Formänderungsmenge festgelegten Zeit tf in Gleichung (2),

$$x = a \times \log(t) + b \qquad (1)$$

wobei t eine verstrichene Zeit seit unmittelbar nach der Freigabe aus dem Werkzeug ist, und
x eine Formänderungsmenge zum Zeitpunkt t ist,

$$Xf = a1 \times \log(tf) + b1 \qquad (2)$$

wobei tf eine im Voraus festgelegte Zeit ist, und
a1 und b1 Werte sind, die in dem Koeffizientenbestimmungsschritt bestimmt werden.

2. Formvorhersageverfahren für einen pressgeformten Artikel nach Anspruch 1, wobei in dem Vorhersagewertberechnungsschritt tf auf einen Zahlenwert in einem Bereich von 4.400 bis 7.800 Sekunden festgelegt wird, in einem Fall, in dem die zwei Zeitpunkte innerhalb von 120 Sekunden unmittelbar nach der Freigabe aus dem Werkzeug liegen, und tf auf einen Zahlenwert in einem Bereich von 7.900 bis 31.000 Sekunden festgelegt wird, in einem Fall, in dem die zwei Zeitpunkte von 120 Sekunden bis 1.800 Sekunden unmittelbar nach der Freigabe aus dem Werkzeug sind.

**3.** Formvorhersageverfahren für einen pressgeformten Artikel nach Anspruch 1 oder 2, wobei die in dem Koeffizientenbestimmungsschritt gemessene Formänderungsmenge eine von den folgenden ist: eine Änderungsmenge eines Abstands zwischen zwei Punkten des pressgeformten Artikels; eine Änderungsmenge eines Abstands zwischen einem Punkt des pressgeformten Artikels und einem Punkt einer Referenzeinrichtung; eine Änderungsmenge eines Winkels zwischen einem Liniensegment zwischen zwei Punkten des pressgeformten Artikels und einem Liniensegment zwischen zwei Punkten der Referenzeinrichtung; eine Änderungsmenge einer Krümmung einer Oberfläche des pressgeformten Artikels; oder eine Änderungsmenge eines Winkels, der durch Liniensegmente zwischen zwei Sätzen von zwei Punkten gebildet wird, die eine oder mehr Biegekanten in dem pressgeformten Artikel einschließen.

**4.** Formvorhersagevorrichtung für einen pressgeformten Artikel zum Vorhersagen einer Form eines pressgeformten Artikels, dessen Form stabil geworden ist, nachdem sich die Form mit dem Verstreichen der Zeit nach einer Rückfederung, die unmittelbar nach der Freigabe aus dem Werkzeug beim Pressformen eines Metallblechs augenblicklich auftritt, verändert, die Vorrichtung umfassend:

eine Zeitmesseinheit, die ausgebildet ist, eine verstrichene Zeit seit unmittelbar nach der Freigabe aus dem Werkzeug zu messen;
eine Formmesseinheit, die ausgebildet ist

zumindest zu zwei Zeitpunkten in einer vorbestimmten Zeit, die seit unmittelbar nach der Freigabe aus dem Werkzeug verstrichen ist, zu messen,
eine Formänderungsmenge eines spezifischen Abschnitts des pressgeformten Artikels zu jedem Zeitpunkt zu messen und einen Messzeitpunkt, einen Messabschnitt und einen Messwert aufzuzeichnen; und

eine Vorhersagewertberechnungseinheit, die ausgebildet ist

Koeffizienten a und b in Gleichung (1) als Koeffizienten a1 und b1, basierend auf einem Messergebnis der Formmesseinheit, zu bestimmen, und
Xf, der ein Vorhersagewert der Formänderungsmenge des spezifischen Abschnitts in dem pressgeformten Artikel, dessen Form stabil geworden ist, ist, durch Einsetzen einer im Voraus entsprechend dem Zeitpunkt der Messung der Formänderungsmenge festgelegten Zeit tf in Gleichung (2) zu erhalten,

$$x = a \times \log(t) + b \qquad (1)$$

wobei t eine verstrichene Zeit seit unmittelbar nach der Freigabe aus dem Werkzeug ist, und
x eine Formänderungsmenge zum Zeitpunkt t ist,

$$Xf = a1 \times \log(tf) + b1 \qquad (2)$$

wobei tf eine im Voraus festgelegte Zeit ist, und
a1 und b1 Werte sind, die dazu ausgebildet sind, in einem Koeffizientenbestimmungsschritt durch die Vorhersagewertberechnungseinheit bestimmt zu werden.

**Revendications**

**1.** Procédé de prédiction de forme pour article moulé à la presse pour prédire une forme d'un article moulé à la presse dont la forme est devenue stable après que la forme change avec un laps de temps après un retour élastique se produisant de manière instantanée immédiatement après libération de la matrice dans un formage à la presse d'une tôle métallique, le procédé étant **caractérisé en ce qu'**il comprend :

une étape de spécification de coefficients consistant à
mesurer, à au moins deux instants dans un temps prédéterminé qui s'est écoulé depuis immédiatement après libération de la matrice, une quantité de variation de forme d'une partie spécifique de l'article moulé à la presse à chaque instant, et
spécifier des coefficients a et b dans l'équation (1) en tant que coefficients a1 et b1 sur la base de résultats de mesure ; et une étape de calcul de valeur de prédiction consistant à obtenir Xf, qui est une valeur de prédiction de la quantité de variation de forme de la partie spécifique dans l'article moulé à la presse dont la forme est devenue stable, par substitution d'un temps tf défini à l'avance selon l'instant de mesure de la quantité de variation de forme dans l'équation (2),

$$x = a \times \log(t) + b \ (1)$$

où t est un temps écoulé depuis immédiatement après libération de la matrice, et
x est une quantité de variation de forme au temps t,

$$Xf = a1 \times \log(tf) + b1 \ (2)$$

où tf est un temps défini à l'avance, et al et bl sont des valeurs spécifiées dans l'étape de spécification de coefficients.

2. Procédé de prédiction de forme pour article moulé à la presse selon la revendication 1, dans lequel, dans l'étape de calcul de valeur de prédiction, tf est défini sur une valeur numérique dans une plage de 4400 à 7800 secondes dans un cas où les deux instants sont à l'intérieur de 120 secondes immédiatement après libération de la matrice, et tf est défini sur une valeur numérique dans une plage de 7900 à 31000 secondes dans un cas où les deux instants vont de 120 secondes à 1800 secondes immédiatement après libération de la matrice.

3. Procédé de prédiction de forme pour article moulé à la presse selon la revendication 1 ou la revendication 2, dans lequel la quantité de variation de forme mesurée dans l'étape de spécification de coefficients est une quantité de variation parmi : une quantité de variation d'une distance entre deux points de l'article moulé à la presse ;

une quantité de variation d'une distance entre un point de l'article moulé à la presse et un point d'un gabarit de référence ; une quantité de variation d'un angle entre un segment de droite entre deux points de l'article moulé à la presse et un segment de droite entre deux points du gabarit de référence ;
une quantité de variation d'une courbure d'une surface de l'article moulé à la presse ; ou une quantité de variation d'un angle formé par des segments de droite entre deux ensembles de deux points prenant en sandwich une ou plusieurs arêtes de pliage dans l'article moulé à la presse.

4. Dispositif de prédiction de forme pour article moulé à la presse pour prédire une forme d'un article moulé à la presse dont la forme est devenue stable après que la forme change avec un laps de temps après un retour élastique se produisant de manière instantanée immédiatement après libération de la matrice dans un formage à la presse d'une tôle métallique, le dispositif comprenant :

une unité de mesure du temps configurée pour mesurer un temps écoulé depuis immédiatement après libération de la matrice ;
une unité de mesure de forme configurée pour
mesurer, à au moins deux instants dans un temps prédéterminé qui s'est écoulé depuis immédiatement après libération de la matrice,
une quantité de variation de forme d'une partie spécifique de l'article moulé à la presse à chaque instant, et enregistrer un instant de mesure, une partie de mesure, et une valeur de mesure ; et
une unité de calcul de valeur de prédiction configurée pour
spécifier des coefficients a et b dans l'équation (1) en tant que coefficients a1 et b1 sur la base d'un résultat de mesure de l'unité de mesure de forme, et
obtenir Xf, qui est une valeur de prédiction de la quantité de variation de forme de la partie spécifique dans l'article moulé à la presse dont la forme est devenue stable, par substitution d'un temps tf défini à l'avance selon l'instant de mesure de la quantité de variation de forme dans l'équation (2),

$$x = a \times \log(t) + b \ (1)$$

où t est un temps écoulé depuis immédiatement après libération de la matrice, et
x est une quantité de variation de forme au temps t,

$$Xf = a1 \times \log(tf) + b1 \ (2)$$

où tf est un temps défini à l'avance, et
a1 et b1 sont des valeurs configurées pour être spécifiées dans une étape de spécification de coefficients par l'unité de calcul de valeur de prédiction.

# FIG.1

```
        ┌─────────┐
        │  START  │
        └────┬────┘
             │
   ┌─────────┴─────────┐
   │    COEFFICIENT    │ ⌇ S1
   │  SPECIFYING STEP  │
   └─────────┬─────────┘
             │
   ┌─────────┴─────────┐
   │  PREDICTION VALUE │ ⌇ S3
   │  CALCULATING STEP │
   └─────────┬─────────┘
             │
        ┌────┴────┐
        │   END   │
        └─────────┘
```

# FIG.2

```
┌─────────────────────────────────────────┐ ～1
│  ┌───────────────────────────────┐       │
│  │ TIME MEASUREMENT UNIT         │ ～3   │
│  │  ┌─────────────────────┐      │       │
│  │  │ TIMER               │ ～3a │       │
│  │  └─────────────────────┘      │       │
│  │  ┌─────────────────────┐      │       │
│  │  │ TIMER CONTROL UNIT  │ ～3b │       │
│  │  └─────────────────────┘      │       │
│  └───────────────────────────────┘       │
│                  │                        │
│                  ▼                        │
│  ┌───────────────────────────────┐       │
│  │ SHAPE MEASUREMENT UNIT        │ ～5   │
│  │  ┌─────────────────────┐      │       │
│  │  │ MEASURING MACHINE   │ ～5a │       │
│  │  └─────────────────────┘      │       │
│  │  ┌─────────────────────┐      │       │
│  │  │ MEASURING MACHINE   │ ～5b │       │
│  │  │ CONTROL UNIT        │      │       │
│  │  └─────────────────────┘      │       │
│  └───────────────────────────────┘       │
│                  │                        │
│                  ▼                        │
│  ┌───────────────────────────────┐       │
│  │ PREDICTION VALUE              │ ～7   │
│  │ CALCULATION UNIT              │       │
│  │  ┌─────────────────────┐      │       │
│  │  │ DISPLAY UNIT        │ ～7a │       │
│  │  └─────────────────────┘      │       │
│  │  ┌─────────────────────┐      │       │
│  │  │ STORAGE UNIT        │ ～7b │       │
│  │  └─────────────────────┘      │       │
│  │  ┌─────────────────────┐      │       │
│  │  │ CALCULATION/        │ ～7c │       │
│  │  │ CONTROL UNIT        │      │       │
│  │  └─────────────────────┘      │       │
│  └───────────────────────────────┘       │
└─────────────────────────────────────────┘
```

# FIG.3

(a)

(b)

(c)

# FIG.4

SHAPE VARIATION AMOUNT
AFTER SPRINGBACK

SPRINGBACK AMOUNT

# FIG.5

# FIG.6

Legend:
- 590MPa-GRADE, R6mm
- 1180MPa-GRADE, R6mm
- 1180MPa-GRADE, R8mm

Y-axis: SHAPE VARIATION AMOUNT (NORMALIZED) /-
X-axis: ELAPSED TIME AFTER DIE RELEASE/s

# FIG.7

120 SECONDS   tf   48 HOURS

Legend:
- 1180MPa-GRADE, R8mm
- EQUATION (1) SHAPE VARIATION APPROXIMATE EXPRESSION

Y-axis: SHAPE VARIATION AMOUNT/mm
X-axis: ELAPSED TIME AFTER DIE RELEASE/s

# FIG.8

● IS SHAPE MEASUREMENT POSITION

(a) CAMBER D 31

(b) D A B C 31 D'

A' B' C'

(c) WALL OPENING A WALL OPENING B WALL OPENING C FLOATING C TORSION C

# FIG.9

ELAPSED TIME AFTER COMPLETION OF FORMING/sec

# FIG.10

B-PILLAR AFTER 48Hr

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021161578 A1

- JP 6981487 B

**Non-patent literature cited in the description**

- Handbook of Ease or Difficulty in Press Forming. Japan Sheet Metal Forming Research Group, 341-342